# EUROPEAN PATENT APPLICATION

(11) **EP 4 538 879 A1**
(43) Date of publication of application: **16.04.2025**
(21) Application number: 24755473.6
(22) Date of filing: 19.08.2024
(51) Int. Cl.: G06F 9/48, G06F 9/50, G06F 3/041

(54) **ELECTRONIC DEVICE FOR CONTROLLING EXECUTION OF PROCESS AND METHOD THEREOF**

(30) Priority: 22.08.2023 KR 20230110184; 28.08.2023 KR 20230113173
(71) Applicant: Samsung Electronics Co., Ltd, Suwon-si, Gyeonggi-do 16677 (KR)
(72) Inventor: SIN, Youngcheol, Suwon-si Gyeonggi-do 16677 (KR); KIM, Younghun, Suwon-si Gyeonggi-do 16677 (KR); SEO, Junhwa, Suwon-si Gyeonggi-do 16677 (KR); YOON, Yeonwoo, Suwon-si Gyeonggi-do 16677 (KR)
(74) Representative: HGF
(86) International application number: PCT/KR2024/012279
(87) International publication number: WO 2025/042164

(57) **Abstract**

According to an embodiment, a processor of an electronic device determines, while executing the instructions based on a plurality of processes, schedule groups respectively corresponding to the plurality of processes based on states of the plurality of processes. The processor adjusts, in response to switching the at least one process from a first schedule group for execution in background to other schedule groups or switching from the other schedule groups to the first schedule group based on the determination of the schedule groups, a length of a time section used for execution of the at least one process. The processor executes the at least one process in the time section having the adjusted length.

## Description

### [Technical Field]

The present disclosure relates to an electronic device for controlling execution of a process and a method thereof.

### [Background Art]

Using a plurality of processes and/or a plurality of threads, a processor (e.g., central processing unit (CPU)) of an electronic device may support multitasking for substantially simultaneously executing a plurality of functions. The processor and/or a system process (or an operating system) executed by the processor may schedule a time section (or time slot) in which the processor is occupied by each of the plurality of processes and/or the plurality of threads.

The above-described information may be provided as a related art for the purpose of helping to understand the present disclosure. No claim or determination is raised as to whether any of the above-described information may be applied as a prior art related to the present disclosure.

### [Mode for Invention]

### [Technical Solution]

According to an embodiment, an electronic device may comprise memory storing instructions, comprising one or more storage mediums; and at least one processor comprising processing circuitry. The instructions, when executed by the at least one processor individually or collectively, may cause the electronic device to determine, for each of a plurality of processes while executing the instructions, a corresponding schedule group among a plurality of predetermined schedule groups based on a state of the process. The instructions, when executed by the at least one processor individually or collectively, may cause the electronic device to redetermine, in response to switching at least one process of the plurality of processes from a first process group to a second process group or switching the at least one process from the second process group to the first process group, a length of a time section used for execution of the at least one process. The instructions, when executed by the at least one processor individually or collectively, may cause the electronic device to execute the at least one process in the time section having the redetermined length. The first process group may comprise a schedule group corresponding to processes for background execution. The second process group may comprise all of the other schedule groups except for the schedule group corresponding to the processes for background execution.

In an embodiment, a method of an electronic device may be provided. The method may comprise determining, for each of a plurality of processes to be executed in the electronic device, a corresponding schedule group among a plurality of predetermined schedule groups based on a state of the process. The method may comprise redetermining, in response to switching at least one process of the plurality of processes from a first process group to a second process group or switching the at least one process from the second process group to the first process group, a length of a time section used for execution of the at least one process. The method may comprise executing the at least one process in the time section having the redetermined length. The first process group may comprise a schedule group corresponding to processes for background execution. The second process group may comprise all of the other schedule groups except for the schedule group corresponding to the processes for background execution.

In an embodiment, a non-transitory computer readable storage medium storing instructions may be provided. The instructions, when executed by an electronic device, may cause the electronic device to determine, for each of a plurality of processes while executing the instructions, a corresponding schedule group among a plurality of predetermined schedule groups based on a state of the process. The instructions, when executed by an electronic device, may cause the electronic device to redetermine, in response to switching at least one process of the plurality of processes from a first process group to a second process group or switching the at least one process from the second process group to the first process group, a length of a time section used for execution of the at least one process. The instructions, when executed by an electronic device, may cause the electronic device to execute the at least one process in the time section having the redetermined length. The first process group may comprise a schedule group corresponding to processes for background execution. The second process group may comprise all of the other schedule groups except for the schedule group corresponding to the processes for background execution.

According to an embodiment, an electronic device may comprise memory for storing instructions and a processor for executing the instructions. The processor may be configured to determine, while executing the instructions based on a plurality of processes, schedule groups respectively corresponding to the plurality of processes, based on states of the plurality of processes. The processor may be configured to adjust, in response to switching the at least one process from a first schedule group for execution in background to other schedule group, or switching the at least one process from the other schedule groups to the first schedule group, based on the determination of the schedule groups, a length of a time section used for execution of the at least one process. The processor may be configured to execute the at least one process in the time section having the adjusted length.

According to an embodiment, a method of an electronic device may include determining, while executing instructions based on a plurality of processes, schedule groups respectively corresponding to the plurality of processes based on states of the plurality of processes. The method may include adjusting, in response to switching the at least one process from a first schedule group for execution in background to other schedule groups or switching from the other schedule groups to the first schedule group based on the determination of the schedule groups, a length of a time section used for execution of the at least one process. The method may include executing the at least one process in the time section having the adjusted length.

According to an embodiment, a non-transitory computer-readable storage medium may include instructions. The instructions, when executed by a processor of an electronic device, may cause the processor to determine, based on state of a plurality of processes, a schedule group respectively corresponding to the plurality of processes. The instructions, when executed by the processor, may cause the processor to adjust, in response to switching the at least one process from a first schedule group for execution in background to other schedule groups or switching from the other schedule groups to the first schedule group, based on the determination of the schedule group, a length of a time section used for execution of the at least one process. The instructions, when executed by the processor, may cause the processor to execute the at least one process in the time section having the adjusted length.

### [Description of the Drawings]

FIG. 1 illustrates an exemplary block diagram for describing hardware configuration of an electronic device according to an embodiment.
FIG. 2 illustrates an example of a flowchart of an electronic device according to an embodiment.
FIG. 3 illustrates an exemplary operation of an electronic device for determining a schedule group corresponding to a process.
FIG. 4 illustrates an example of a flowchart of an electronic device according to an embodiment.
FIG. 5 illustrates an exemplary operation of an electronic device for scheduling a time resource of a processor using a process group corresponding to processes.
FIG. 6 illustrates an example of a flowchart of an electronic device according to an embodiment.
FIG. 7 illustrates an exemplary operation of an electronic device transmitting information between processes.
FIG. 8 is graphs illustrating a usage of a processor of an electronic device in a time domain while according to an embodiment, the electronic device is booted.
FIG. 9 is a block diagram of an electronic device in a network environment according to various embodiments.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

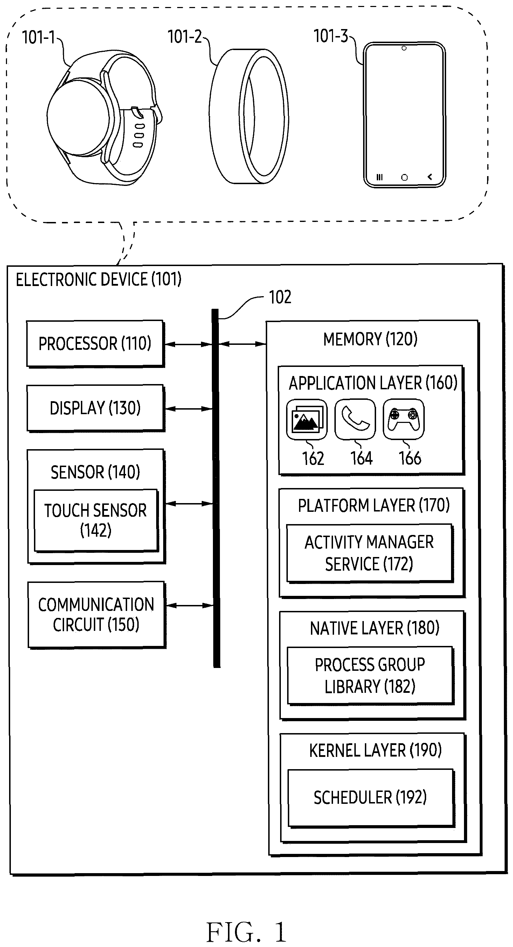

FIG. 1 illustrates an exemplary block diagram for describing hardware configuration of an electronic device according to an embodiment. In terms of being owned by a user, the electronic device 101 may be referred to as a terminal (or a user terminal). The terminal may include smart accessories such as a smartwatch 101-1, a smart ring 101-2, and/or a head-mounted device (HMD). For example, the terminal may include a personal computer (PC), such as a laptop and a desktop. For example, the terminal may include a smartphone 101-3, a smartpad, and/or a tablet PC. Referring to FIG. 1, the smartwatch 101-1, the smart ring 101-2 and/or the smartphone 101-3 are illustrated as an exemplary form factor of the electronic device 101. The embodiment is not limited thereto.

According to an embodiment, the electronic device 101 may perform one or more tasks while turned on. In order to perform one or more tasks, the electronic device 101 may perform an operation (e.g., booting) for activating one or more circuits included in the electronic device 101. After booting, the electronic device 101 may perform the one or more tasks using the one or more circuits. Referring to FIG. 1, one or more circuits included in the electronic device 101 are illustrated as blocks.

Referring to FIG. 1, the electronic device 101 may include at least one of a processor 110, a memory 120, a display 130, a sensor 140, or a communication circuit 150. The processor 110, the memory 120, the display 130, the sensor 140, and the communication circuit 150 may be electrically and/or operably coupled with each other by an electronical component such as a communication bus 102. Hereinafter, the operational coupling of the electronical components (or hardware components) may mean that a direct connection or an indirect connection between the electronical components is established by wire or wirelessly so that a second electronical component is controlled by a first electronical component. Although illustrated based on the different blocks, an embodiment is not limited thereto, and a portion (e.g., at least a portion of the processor 110, the memory 120, the sensor 140, and communication circuit 150) of the hardware of FIG. 1 may be included in a single integrated circuit such as a system on a chip (SoC). The type and/or number of hardware components included in the electronic device 101 are not limited to those illustrated in FIG. 1. For example, the electronic device 101 may include only a portion of the hardware components illustrated in FIG. 1.

According to an embodiment, the processor 110 of the electronic device 101 may include the hardware component for processing data based on one or more instructions. For example, the hardware component for processing data may include an arithmetic and logical unit (ALU), a floating point unit (FPU), a field programmable gate array (FPGA), a central processing unit (CPU), and/or an application processor (AP). The number of the processor 110 may be one or more. For example, the processor 110 may have a structure of a multi-core processor such as a dual core, a quad core, a hexa core, or an octa core. The processor 110 based on the multi-core structure may include core circuits having different performance, consumption currents, and/or frequency ranges based on the big-little structure.

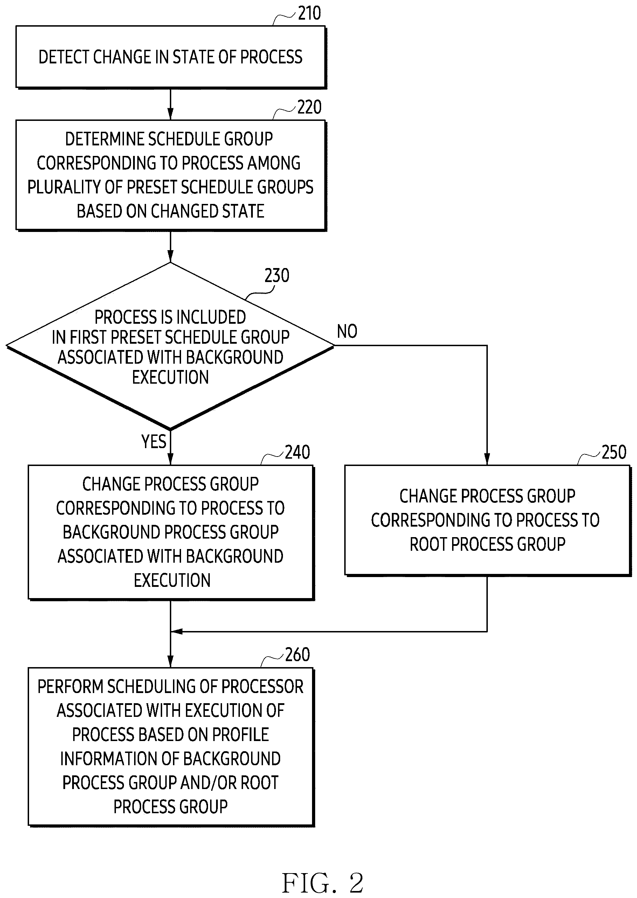

According to an embodiment, the processor 110 may manage or schedule one or more tasks to be performed by the electronic device 101 based on a process (or a thread). The process may be a unit of task and/or calculation performed by the processor 110. The processor 110 may generate, terminate, or manage the process classified by a program (or a software application) installed in the electronic device 101. When a plurality of processes (or threads) is generated, the processor 110 may schedule an order and/or a time section in which the instructions (e.g., the instructions included in different software applications) are executed, based on the plurality of the processes. An example of a scheduling operation of the processor 110 based on the processes will be described with reference to FIG. 2.

According to an embodiment, the memory 120 of the electronic device 101 may include the hardware component for storing data and/or the instruction inputted to or outputted from the processor 110. For example, the memory 120 may include volatile memory such as random-access memory (RAM) and/or non-volatile memory such as read-only memory (ROM). For example, the volatile memory may include at least one of dynamic RAM (DRAM), static RAM (SRAM), Cache RAM, and pseudo SRAM (SRAM). For example, the non-volatile memory may include at least one of programmable ROM (PROM), erasable PROM (EPROM), electrically erasable PROM (EEPROM), flash memory, hard disk, compact disk, solid state drive (SSD), and embedded multi media card (eMMC).

According to an embodiment, the display 130 of the electronic device 101 may output visualized information to a user. For example, the display 130 may be controlled by a controller such as a graphic processing unit (GPU), and may output visualized information to the user. The display 130 may include a liquid crystal display (LCD), a plasma display panel (PDP), and/or one or more light emitting diode (LED). The LED may include an organic LED (OLED). The display 130 may include a flat panel display (FPD), a flexible display, and/or electronic paper. An embodiment is not limited thereto, and the display 130 may have at least a partially curved shape or a deformable shape.

According to an embodiment, the sensor 140 of the electronic device 101 may generate electronic information that may be processed by the processor 110 and/or the memory 120 from non-electronic information associated with the electronic device 101. For example, the sensor 140 may include a touch sensor 142 for detecting an external object (e.g., a user's finger) on one surface (e.g., a front surface of the electronic device 101 on which the display 130 is disposed) of a housing of the electronic device 101. The touch sensor 142 may be referred as a touch sensor panel (TSP). Using the touch sensor 142, the processor 110 may detect an external object that is in contact with the display 130 or is floating on the display 130. In response to detecting the external object, the processor 110 may execute a function associated with a specific visual object corresponding to a position of the external object on the display 130 among the visual objects displayed on the display 130.

Referring to FIG. 1, a touch sensor 142 is illustrated as an example of the sensor 140, but an embodiment is not limited thereto, and the sensor 140 may include a global positioning system (GPS) sensor. In addition to the GPS sensor, the sensor 140 may generate information representing a geographical location of the electronic device 101 based on a global navigation satellite system (GNSS) such as galileo and/or a beidou (compass). The sensor 140 may include an image sensor, an illuminance sensor, a grip sensor, a hall sensor, a proximity sensor, a photoplethysmogram (PPG) sensor, a fingerprint sensor, an audio sensor (e.g., a microphone), and/or a time-of-flight (ToF) sensor for detecting electromagnetic wave including light.

According to an embodiment, the communication circuit 150 of the electronic device 101 may include hardware for supporting transmission and/or reception of an electrical signal between the electronic device 101 and an external electronic device. For example, the communication circuit 150 may include at least one of a modem (MODEM), an antenna, and an optic/electronic (O/E) converter. The communication circuit 150 may support the transmission and/or reception of electrical signal based on a various type of protocol such as ethernet, a local area network (LAN), a wide area network (WAN), a wireless fidelity (WiFi), near field communication (NFC), Bluetooth, bluetooth low energy (BLE), ZigBee, long term evolution (LTE), fifth-generation (5G) new radio (NR), sixth-generation (6G), and/or above-6G.

Although not illustrated, the electronic device 101 according to an embodiment may include an output means for outputting information in a different form other than a visualized form. For example, the electronic device 101 may include a speaker for outputting an acoustic signal. For example, the electronic device 101 may include a motor for providing haptic feedback based on vibration.

According to an embodiment, in the memory 120, one or more instructions (or commands) representing calculation and/or operations to be performed by the processor 110 on data may be stored. The set of one or more instructions may be referred to as firmware, an operating system, a process, a routine, a sub-routine and/or software application (hereinafter, application). For example, when a set of a plurality of instructions distributed in the form of the operating system, the firmware, driver, and/or the application are executed, the electronic device 101 and/or the processor 110 may perform at least one of operations of FIG. 2, FIG. 4, and/or FIG. 6. Hereinafter, the installation of an application in the electronic device 101 may mean that one or more instructions provided in the form of the application are stored in the memory 120 of the electronic device 101, and the one or more applications are stored in an executable format (e.g., a file with an extension designated by the operating system of the electronic device 101).

Referring to FIG. 1, programs stored in the memory 120 are divided and illustrated according to functions supported by each of the programs and/or information exchanged between the programs. Referring to FIG. 1, the programs installed in the electronic device 101 may be classified as any one of different layers including an application layer 160, a platform layer 170, a native layer 180, and/or a kernel layer 190, based on a target. An embodiment is not limited to this, and the layers may further include other layer, such as a hardware abstraction layer (HAL).

Referring to FIG. 1, such as the scheduler 192, the program for controlling the order of the instructions inputted to the processor 110 and/or the processes (or the threads) executed by the processor 110 may be classified as the kernel layer 190. The program for managing information used to control the order of the process, such as a process group library 182 (e.g., libprocessgroup), may be classified as the native layer 180. The program included in the native layer 180 may configured with instructions (e.g., instructions directly readable by the processor 110) different from the instructions of a virtual machine-based executable type, such as a java byte code. An embodiment is not limited thereto. The platform layer 170 may provide an application programming interface (API) executable (or capable of invoking or calling) based on a software application (or an application program) classified as the application layer 160. Such as an activity manager service 172, the program for managing a screen (e.g., window and/or activity) provided by the program classified as the application layer 160 may be classified as the platform layer 170.

Referring to FIG. 1, the programs divided into the platform layer 170, the native layer 180, and/or the kernel layer 190 are illustrated, but an embodiment is not limited thereto. The functions and/or the operations of at least two of the programs divided into the platform layer 170, the native layer 180, and/or the kernel layer 190 may be integrated into one program. Although the operation of the electronic device 101 and/or the processor 110 is described separately by programs divided into the platform layer 170, the native layer 180, and/or the kernel layer 190, an embodiment is not limited thereto. For example, an operation of the electronic device 101 and/or the processor 110 described with reference to FIGS. 2 to 8 may be performed by a single program and/or a single process.

According to an embodiment, the program designed to target a user of the electronic device 101 may be classified in the application layer 160. As an example of the programs classified as the application layer 160, a gallery application 162 for browsing a photo and/or a video, a call application 164 for a voice call and/or a video call, and/or a game application 166 are illustrated, but an embodiment is not limited thereto. For example, the programs (e.g., a software application) classified as the application layer 160 may call the application programming interface (API) and cause execution of the function supported by the programs classified as the platform layer 170.

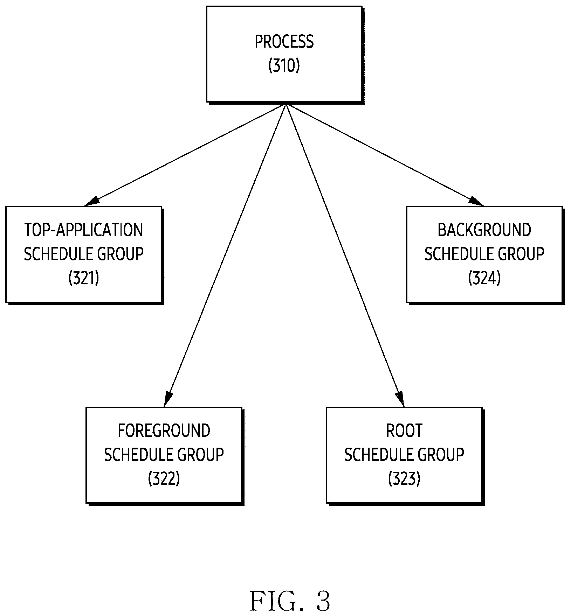

According to an embodiment, the processor 110 of the electronic device 101 may control execution of the programs divided into blocks and illustrated in FIG. 1 based on the process. While executing instructions based on the plurality of processes, the processor 110 may detect or check states of the plurality of processes. The processor 110 may classify the processes as designated (or preset, predetermined, or specified) schedule groups based on the states of the processes. As an example without limitation, the schedule groups may include a top-application schedule group, a foreground schedule group, a background schedule group, and/or a root schedule group. The schedule group may be referred as a sched group. An operation in which the processor 110 of the electronic device 101 classifies a process as any one of the schedule groups will be described with reference to FIG. 3.

According to an embodiment, the processor 110 of the electronic device 101 may schedule a resource to be used to execute each of the processes based on the result of classifying the processes as the schedule group. The resource may represent availability of the processor 110 and/or the electronic device 101 consumed or occupied for execution of the process. The resource scheduled by the processor 110 may include a length of the time section of the processor 110 used to execute instructions of the process. An embodiment is not limited thereto, and the resource scheduled by the processor 110 may include a size of a portion assigned for the process in the memory 120 and/or a port number assigned to the process to use the network.

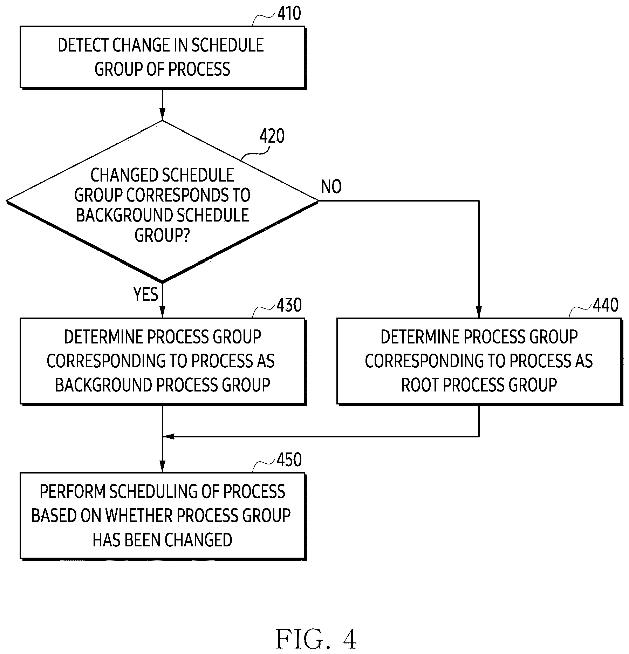

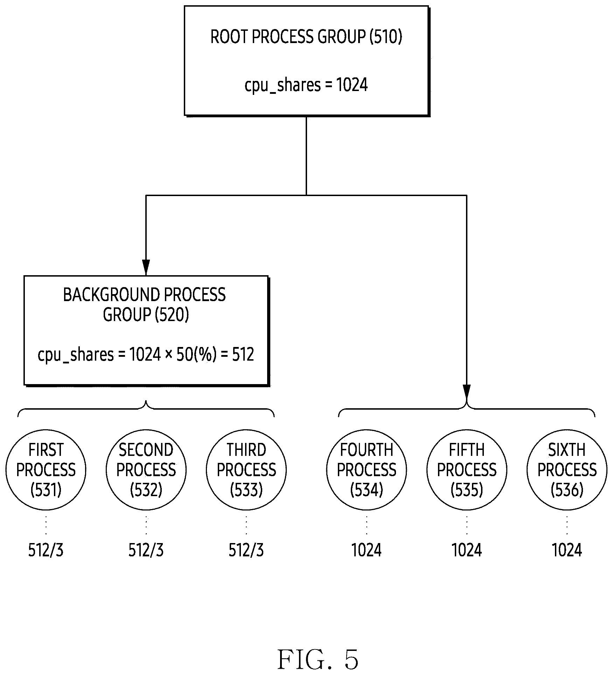

According to an embodiment, the processor 110 of the electronic device 101 may prevent or reduce a delay in execution of the processes for scheduling, by reducing frequency of scheduling. An operation of determining the length of the time section for executing the instructions of the process by the processor 110 based on scheduling will be described with reference to FIGS. 4 and/or 5.

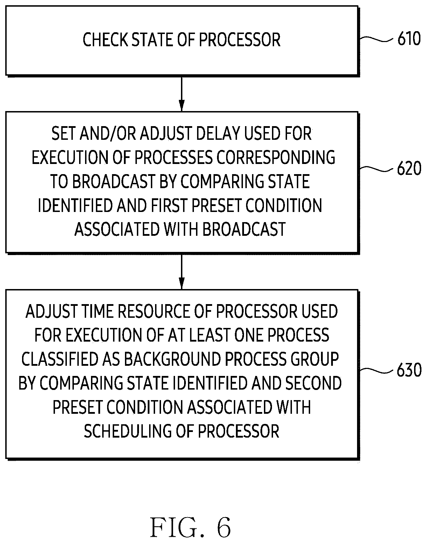

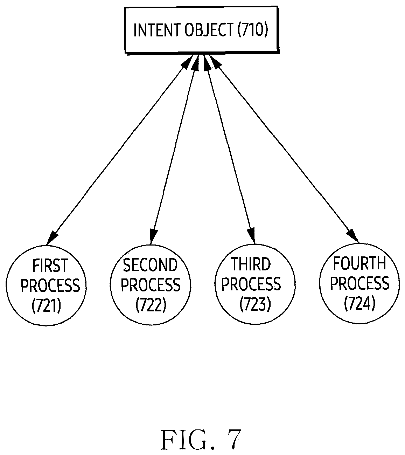

According to an embodiment, the processor 110 of the electronic device 101 may support the function of transmitting and/or receiving information between processes. The function may be executed based on the API provided by the platform layer 170 and/or a preset data structure (e.g., an intent object). For example, in response to a call of the API based on the instructions of a specific process, the processor 110 may execute instructions of another process. In an embodiment, the processor 110 may adjust (e.g., delay) timing of executing the function for transmitting information between the processes, based on a usage of the processor 110 changed by execution of the processes. An operation of adjusting the timing at which the processor 110 executes the function will be described with reference to FIGS. 6 and/or 7.

As described above, according to an embodiment, the processor 110 of the electronic device 101 may perform reducing a load on the processor 110. In order to improve response speed (e.g., response speed of the electronic device 101 to a user input) of, for example, a low-power device and/or a low-performance device, the electronic device 101 may reduce frequency of scheduling the processes or simplify the operation of scheduling the processes. For example, since time and/or the load consumed in scheduling may slow response speed in case of the low-performance device, the processor 110 of the electronic device 101 may reduce frequency of scheduling the processes. In order to improve the response speed, the electronic device 101 may change the timing of executing the function of transmitting information between processes.

FIG. 2 illustrates an example of a flowchart of an electronic device according to an embodiment. The electronic device 101 and/or the processor 110 of FIG. 1 may perform the operation of the electronic device described with reference to FIG. 2.

Referring to FIG. 2, in an operation 210, according to an embodiment, a processor of an electronic device may detect a change in a state of a process. A state of the operation 210 may include an execution state of the process executed by the processor. According to an embodiment, the state of the operation 210 may be distinguished by at least one of whether a screen provided by the process is displayed on a display (e.g., a display 130 of FIG. 2) of the electronic device, whether an audio signal provided by the process is outputted through a speaker of the electronic device, whether an animation for a screen change is reproduce by the process, or whether an operation such as download, upload, and/or update is performed by the process.

According to an embodiment, the processor of the electronic device may detect the change in the state of the process based on instructions included in the process. For example, based on executing the instructions for switching to a background state that does not occupy an output means of the electronic device (e.g., the display 130 and/or the speaker in FIG. 2), the processor may switch the process corresponding to the instructions to the background state. An embodiment is not limited thereto, and the processor may detect the change in the state of the process by tracking or monitoring the state of the process.

Referring to FIG. 2, in an operation 220, the processor of the electronic device according to an embodiment may determine a schedule group corresponding to the process among a plurality of preset schedule groups based on a changed state. While executing the plurality of processes, the processor may determine the schedule group respectively corresponding to the plurality of processes based on states of the plurality of processes. That is, the processor may determine, for each of the plurality of processes, a corresponding schedule group among the plurality of predetermined schedule groups based on the state (e.g. the changed state) of the process.

According to an embodiment, the preset schedule groups of the operation 220 may include a top-application schedule group corresponding to the process providing the screen displayed on the display (e.g., the display 130 of FIG. 2) of the electronic device. The preset schedule groups of the operation 220 may include a foreground schedule group corresponding to a process that is not included in the top-application schedule group, and a process that provides an audio signal outputted by the electronic device, or provides the animation (or visual effect) displayed on the display. The preset schedule groups of the operation 220 may include a background schedule group and/or a root schedule group corresponding to the process that is not included in the top-application schedule group and/or the foreground schedule group. For example, the processor may classify the process switched to the background state as the background schedule group.

Referring to FIG. 2, in an operation 230, according to an embodiment, the processor of the electronic device may check whether the process is included in a first preset schedule group associated with a background execution. The first preset schedule group of the operation 230 may include the background schedule group. When the process classified as the first preset schedule group is identified based on the change in state (230-YES), the processor may perform an operation 240. For example, when the schedule group corresponding to the processor is changed from other schedule groups different from the background schedule group to the background schedule group, the processor may perform the operation 240. When the process that is not classified as the first preset schedule group is identified based on the change in state (230-NO), the processor may perform an operation 250. For example, when the schedule group corresponding to the processor is changed from the background schedule group to the other schedule group, the processor may perform operation 250.

Referring to FIG. 2, in the operation 240, according to an embodiment, the processor of the electronic device may change a process group corresponding to the process to a background process group associated with the background execution. The process group may be referred as a process control group and/or cgroup. The process group may be a group for classifying the process in order to assign resource of the processor and/or the electronic device. For example, with respect to the process switched to the background schedule group from other schedule groups different from the background schedule group, the processor may classify the process as the background process group corresponding to profile information for executing in background. In an embodiment, the process group for distribution and/or assignment of the resource may be divided into only two process groups (e.g., the background process group and the root process group for classifying the process different from the background process group). For example, a first process group may comprise a schedule group corresponding to processes for background execution, and a second process group may comprise all of the other schedule groups except for the schedule group corresponding to processes for background execution.

Referring to FIG. 2, in the operation 250, according to an embodiment, the processor of the electronic device may change the process group corresponding to the process to the root process group. In an embodiment in which the processor classifies the process using two process groups, one or more processes classified as the background process group of the operation 240 and other processes may be classified as the root process group of the operation 250. Referring to the operations 230, 240, and 250 of FIG. 2, the process executed in the background may be classified as the background process group, and other processes not classified as the background process group may be classified as the root process group. For example, the processor may classify the plurality of processes as any one of the background process group or the root process group.

Referring to FIG. 2, in an operation 260, according to an embodiment, the processor of the electronic device may perform scheduling of the processor associated with execution of the process based on profile information of the background process group and/or the root process group. Referring to FIG. 2, based on the operations 230, 240, and 250, the processor may perform scheduling of processes classified as the background process group or the root process group based on profile information of a corresponding process group.

According to an embodiment, the profile information of the operation 260 may correspond to the process group (e.g., the background process group and/or the root process group of the operations 240 and 250) used by the electronic device. The profile information may include time of the processor used for execution of the process included in the process group, the limitation of an input and an output of memory (e.g., memory 120 of FIG. 2), and/or the size of the cache and/or page formed for execution of the process in the memory. When the electronic device manages the process based on hierarchical process groups, a child process group of a specific process group may inherit at least a portion of the profile information of the specific process group. Based on the inheritance, the scheduling for process included in the child process group may be performed based on the profile information of the specific process group.

According to an embodiment, based on the scheduling of operation 260, the processor may determine the time occupied for the processor to execute each of the processes. For example, the processor may adjust a length (or duration) of the time section used for execution of the process. In an embodiment, when switching at least one process from the first preset schedule group for execution in background to other schedule groups or switching from the other schedule groups to the first preset schedule group, the processor may perform scheduling of the operation 260. For example, in response to detecting the at least one process, the processor may adjust the length of the time section used for execution of the at least one process. The processor may execute the at least one process in the time section having the adjusted length. For example, in response to switching at least one process of the plurality of processes from a first process group (e.g. background process group) to a second process group (e.g. root process group) or switching the at least one process from the second process group to the first process group, the processor may redetermine a length of a time section used for execution of the at least one process, and execute the at least one process in the time section having the redetermined length.

According to an embodiment, while the processor of the electronic device performs scheduling of the operation 260, execution of process and/or thread based on the processor (or a specific core included in the processor) may be at least temporarily stopped. For example, as in operations 240 and 250, the processor may simplify the scheduling operation based on a classification of process based on simplified process groups (e.g., the background process group and/or the root process group). Since the simplified process groups are used, the processor may reduce frequency (and/or number of times) of performing scheduling again according to the change in the process group. Since frequency and/or time at which execution of the process and/or thread by scheduling is stopped is reduced, response speed of the processor to other event such as a user input may be increased. For example, the processor may execute, in the case that the at least one process is switched from a schedule group in the second process group (e.g. the root process group) to another schedule group in the second process group, the at least one process without redetermining a length of a time section used for execution of the at least one process.

The operations of FIG. 2 may be performed by different programs of the electronic device described with reference to FIG. 1. For example, the operation 220 for classifying a schedule group may be performed based on execution of the activity manager service 172 of FIG. 1. Based on execution of the activity manager service 172 of FIG. 1, the processor may perform the operations 230, 240, and 250. The processor executing the activity manager service 172 of FIG. 1 may execute the process group library 182 of FIG. 1 based on the result of classifying the process group corresponding to the process. The processor executing the process group library 182 of FIG. 1 may identify profile information corresponding to each process group. Based on the identified profile information, the processor may perform scheduling of the operation 260. The scheduling of operation 260 may be performed based on execution of the process group library 182 and/or the scheduler 192 of the kernel layer 190 of FIG. 1.

Hereinafter, with reference to FIG. 3, an exemplary operation of the electronic device for determining the schedule group corresponding to the process of the operation 220 will be described.

FIG. 3 illustrates an exemplary operation of an electronic device for determining a schedule group corresponding to a process 310. The electronic device 101 and/or the processor 110 of FIG. 1 may perform an operation described with reference to FIG. 3. The operation of the electronic device of FIG. 3 may be associated with the operation 220 of FIG. 2. The operation of the electronic device of FIG. 3 may be performed based on execution of the activity manager service 172 (or the OomAdjuster module included in the activity manager service 172) of FIG. 1.

Referring to FIG. 3, exemplary schedule groups used for classification of the process 310 are shown. A top-application schedule group 321 may be set to classify a process associated with a screen displayed on a display (e.g., the display 130 of FIG. 2). The screen may have a form of a figure (e.g., a rectangle and/or a rectangle with rounded corner) occupying at least a portion of a display area of the display, such as a window and/or an activity. Among the screens managed by the activity manager service 172 of FIG. 1, the process corresponding to the screen currently displayed on the display may be classified as a top-application schedule group 321.

According to an embodiment, a foreground schedule group 322, a background schedule group 324, and/or a root schedule group 323 may be set to classify other processes other than the process classified as the top-application schedule group 321. The foreground schedule group 322 does not correspond to the screen displayed on the display, but may be set to classify the process for outputting an audio signal or outputting an animation. For example, in response to an input of selecting an icon in a launcher screen (or a home screen), the electronic device may display an execution screen corresponding to the icon. While switching from the launcher screen to the execution screen, the electronic device may reproduce the animation for switching from the launcher screen to the execution screen based on the process corresponding to the launcher screen. In the example, the process corresponding to the execution screen may be classified as the top-application schedule group 321, and the process corresponding to the launcher screen may be classified as the foreground schedule group 322.

According to an embodiment, the background schedule group 324 may be set to classify the process that is explicitly switched to a background state by instructions. The background schedule group 324 may be set to classify the process switched to the background state by a system process of the electronic device (e.g., the activity manager service 172 of FIG. 1). The processor may select or filter the process to be classified as the background schedule group 324 among the processes not classified as the top-application schedule group 321 and the foreground schedule group 322 among a plurality of processes.

According to an embodiment, the root schedule group 323 may be set to classify the remaining processes not classified as the top-application schedule group 321, the foreground schedule group 322, and the background schedule group 324. The electronic device may classify the process as any one of the process group described with reference to FIG. 3 based on a state in which the process is executed and/or a function executed by the process. All of the processes executed by the processor may be classified as any one of the process groups of FIG. 3. When the state of the process is changed, the electronic device may change the process group corresponding to the process.

According to an embodiment, the electronic device may adjust a resource (e.g., a time resource of the processor used for execution of the process) of the electronic device to be occupied for execution of the process by using the process group. The electronic device may assign a resource to each of the processes by using the background process group corresponding to the background schedule group 324 and the root process group corresponding to all of other schedule groups (e.g., the top-application schedule group 321, the foreground schedule group 322 and/or the root schedule group 323). For example, for the process switched between the top-application schedule group 321, the foreground schedule group 322, and/or the route schedule group 323, the processor may maintain resources assigned to the process without changing the process group corresponding to the process. In the example, the processor may not change the resource. For example, for the process that is switched from the background schedule group 324 to other schedule groups or from other schedules to the background schedule group 324, the processor may change the process group corresponding to the process and perform scheduling for the process again.

Hereinafter, an example of an operation of an electronic device and/or a processor detecting a change in a schedule group will be described with reference to FIG. 4.

FIG. 4 illustrates an example of a flowchart of an electronic device according to an embodiment. The electronic device 101 and/or the processor 110 of FIG. 1 may perform an operation of the electronic device described with reference to FIG. 4. The operation of FIG. 4 may be associated with at least one of the operations of FIG. 2.

Referring to FIG. 4, in an operation 410, according to an embodiment, the processor of the electronic device may detect a change in the schedule group of the process. As described above with reference to FIGS. 1 to 3, the process may be reclassified from any one of the preset schedule groups to another based on the change in state of the process. The preset schedule groups may include the schedule groups described with reference to FIG. 3. The processor detecting the change in the schedule group may perform an operation 420.

Referring to FIG. 4, in the operation 420, according to an embodiment, the processor of the electronic device may detect whether the changed schedule group corresponds to the background schedule group. The background schedule group of the operation 420 may include the background schedule group 324 of FIG. 3. When the schedule group changed based on the operation 410 corresponds to the background schedule group (420-YES), the processor may perform an operation 430. When the schedule group changed based on the operation 410 is different from the background schedule group (420-NO), the processor may perform an operation 440.

Referring to FIG. 4, in the operation 430, according to an embodiment, the processor of the electronic device may determine the process group corresponding to the process as the background process group. When the process is changed to the background schedule group, the processor may classify the process into the background process group. Switching the state of the process to a background state may cause change in all of the schedule group of the process and the process group.

Referring to FIG. 4, in the operation 440, according to an embodiment, the processor of the electronic device may determine the process group corresponding to the process as the root process group. When the process is changed to the schedule group different from the background schedule group, the processor may classify the process into the root process group. When the state of the process is switched between the states different from the background state, the process group of the processor may be maintained in the root process group.

Referring to the operations 430 and 440 of FIG. 4, the processor of the electronic device may classify the plurality of processes as any one of a first process group (e.g., the background process group of operation 430) for execution in the background and a second process group (e.g., the root process group of operation 440) different from the first process group based on the schedule groups corresponding to each of the processes.

Referring to FIG. 4, in an operation 450, according to an embodiment, the processor of the electronic device may perform scheduling of the process of the operation 410 based on whether the process group has been changed. Since the processor determines the process group corresponding to the process among the background process group or the root process group, the processor may perform the operation 450 based on switching the process between the background process group and the root process group. For example, in response to switching at least one process of the plurality of processes from a first process group (e.g. background process group) to a second process group (e.g. root process group) or switching the at least one process from the second process group to the first process group, the processor may redetermine a length of a time section used for execution of the at least one process, and execute the at least one process in the time section having the redetermined length. For example, when the process is switched between other scheduling groups different from the background scheduling group corresponding to the background process group, the processor may maintain a predetermined scheduling without performing scheduling based on the operation 450. For example, the processor may execute, in the case that the at least one process is switched from a schedule group in the second process group (e.g. the root process group) to another schedule group in the second process group, the at least one process without redetermining a length of a time section used for execution of the at least one process. Since the scheduling based on the operation 450 is not performed, the processor may save or reduce time resource consumed for scheduling.

Referring to FIG. 4, when the scheduling of the operation 450 is not performed, the processor may maintain the scheduling of the process independently of detecting the change in the schedule group of the operation 410. For example, when the scheduling group of the process is changed between the scheduling groups different from the background scheduling group, the processor may not change information (e.g., profile information) for scheduling the process. Since the processor does not perform an additional calculation to change the information for scheduling the process, the processor may reduce resource consumed for scheduling. For example, instead of changing the information for scheduling, the processor may process a user input including a touch input.

As described above, according to an embodiment, the processor of the electronic device may classify the process as any one of the background process group or the root process group. When a process is switched between the process groups, the processor may change a scheduling attribute (e.g., a duration in which the processor executes the process) for the process. Since all other schedule groups different from the background schedule group are included in the root process group, when the process is switched between the top-application schedule group or the foreground schedule group, the process group of the process may be maintained in the root process group. For example, switching the process between the other schedule groups may not trigger the scheduling of the processor. Since frequency with which scheduling is performed is reduced, the amount of calculation and/or time for scheduling may be reduced, and response speed may be increased. Since the amount of calculation for scheduling is reduced, heat generation of the electronic device may be reduced, and battery life may be increased.

Hereinafter, an operation of the electronic device performing scheduling based on switching of the process group will be described with reference to FIG. 5.

FIG. 5 illustrates an exemplary operation of an electronic device for scheduling a time resource of a processor using a process group corresponding to processes. The electronic device 101 and/or the processor 110 of FIG. 1 may perform an operation of the electronic device described with reference to FIG. 5. The operation of FIG. 5 may be associated with at least one of the operations of FIG. 2 and/or FIG. 4.

Referring to FIG. 5, a hierarchical relationship between a root process group 510 and a background process group 520, which is a sub-process group of the root process group 510, is illustrated as an example. The background process group 520 may inherit or use at least a portion of information (e.g., profile information) for scheduling the process of the root process group 510. For example, at least one of memory bandwidth limit, cache memory size upper limit, time resource share of the processor, and/or network resource limit applied to the process of the root process group 510 may be applied to the process of the background process group 520. For example, the processor may schedule the at least one process based on first profile information corresponding to the first process group (e.g. background process group 520) in the case that the at least one process is switched to the first process group, and may schedule the at least one process based on second profile information corresponding to the second process group (e.g. root process group 510) in the case that the at least one process is switched to the second process group.

Referring to FIG. 5, an exemplary state of the electronic device executing six processes is illustrated. The number of the processes executed by the electronic device is not limited to the exemplary state of FIG. 5. A first process 531, a second process 532, and a third process 533 may be classified as the background process group 520, and a fourth process 534, a fifth process 535, and a sixth process 536 may be classified as the root process group 510. The operation in which the electronic device classifies a plurality of processes may be performed based on the operations of FIG. 2 and/or FIG. 4. An embodiment is not limited thereto, and the process executed at the kernel layer and/or the platform layer may be classified as the root process group 510.

Referring to FIG. 5, according to an embodiment, the electronic device may calculate duration of the processor that executes each of the processes based on a weight. The 'CPU_shares' (or 'CPU.shares') of FIG. 5 may be a numeric value used for the calculation of the process. The numeric value may be referred as a weight, a time slice, and/or a quantum. For example, the electronic device may determine, based on weights respectively assigned to the plurality of processes, lengths of time sections used to execute each of the plurality of processes. The lengths of time sections used to execute processes in the first process group (e.g. the background process group) may be determined based on a first weight corresponding to the first process group, and the lengths of time sections used to execute processes in the second process group may be determined based on a second weight corresponding to the second process group. With the processes included in the root process group 510, the electronic device may assign a matched weight (e.g., 1024). In an embodiment of FIG. 5, the weight may be assigned to the fourth process 534 to the sixth process 536. For example, each process in the second process group may be assigned the second weight. The weight assigned to the process of the root process group 510 may be assigned to the entire background process group 520. The weight of the root process group 510 may be applied to the background process group 520 based on the hierarchical relationship between the root process group 510 and the background process group 520. For example, the first weight may be divided among each process in the first process group.

According to an embodiment, the electronic device may change the weight (e.g., 1024) assigned to the background process group 520 based on the state of the processor (e.g., a load and/or usage). For example, in response to at least one of a preset event, such as receiving a touch input, usage of the processor increased above threshold, a temperature of the processor exceeding threshold temperature, and/or update, the processor may change the weight. For example, the processor may adjust the first weight based on at least one of a usage of the processor, a temperature identified by a temperature sensor of the electronic device, or a touch input identified via a touch sensor of the electronic device. The processor may calculate the time resource for executing all the processes of the background process group 520 by multiplying the weight assigned to the background process group 520 by a coefficient based on the state of the processor. In an embodiment of FIG. 5, the electronic device may reduce the weight assigned to the background process group 520 by 50% (e.g., 1024×50% = 512). The coefficient applied to the weight (e.g., 50%) may be determined based on the above-described example. For example, the electronic device designed for detection and/or processing of health data, such as a smart watch (e.g., the smart watch 101-1 of FIG. 1), may determine the coefficient applied to the weight of the background process group 520 as a preset coefficient (e.g., 70% to 100%) to process the process associated with the health data.

Referring to FIG. 5, the weights of each of the six processes are illustrated. The electronic device may assign the total weight 512 assigned to the background process group 520 as the number (e.g., three) of the process included in the background process group. For example, the processes (e.g., the first process 531 to the third process 533) included in the background process group 520 may each have the weight of 512/3 ≃ 170.7. The processes (e.g., the fourth process 534, to the sixth process 536) included in the root process group 510 may each have the weight of 1024. As described above, the weights assigned to each of the processes may be selected from among the weight assigned to the background process group 520 or the weight assigned to the root process group 510. The weight assigned to the background process group 520 may be adjusted based on at least one of the usage the processor, the temperature of the electronic device, or the touch input.

According to an embodiment, the electronic device may determine, based on the weights respectively assigned to the plurality of processes, lengths of time sections used to execute each of the plurality of processes. A rate of the time section of the processor used for executing the process may correspond to the sum of the weights of all the processes and the rate of the weight assigned to the process. In an embodiment of FIG. 5, the rate at which the processor executes six processes may be calculated as Table 1.

**[Table 1]**

| Process | 1 | 2 | 3 | 4 | 5 | 6 | Sum |
|---|---|---|---|---|---|---|---|
| Weight | 170.7 | 170.7 | 170.7 | 1024 | 1024 | 1024 | 4096 |
| Time Resource Share | 4.17% | 4.17% | 4.17% | 25% | 25% | 25% | 87.51% |

Referring to Table 1, due to the coefficient applied as the weight of the background process group 520, about 12.5% of the time resource may be used for other process and/or function different from the six processes. As the number of processes classified as the background process group 520 increases, the time resource share of the process included in the background process group 520 may decrease. As the number of processes included in the root process group 510 increases, the time resource share of processes classified as the background process group 520 may decrease.

As described above, according to an embodiment, the processor of the electronic device may adjust or determine the length of the time section of the processor used for execution of the process using only the background process group 520 and the root process group 510.

FIG. 6 illustrates an example of a flowchart of an electronic device according to an embodiment. The electronic device 101 and/or the processor 110 of FIG. 1 may perform an operation of the electronic device described with reference to FIG. 6. The operation of FIG. 6 may be associated with at least one of the operations of FIGS. 2 and/or 4.

Referring to FIG. 6, in an operation 610, according to an embodiment, a processor of the electronic device may check or detect a state of the processor. For example, the processor may obtain parameters representing the state of the processor. The parameters may include a temperature of the electronic device and/or the processor, the usage of processor used by executing the process, and/or whether a touch input has been identified.

Referring to FIG. 6, in an operation 620, according to an embodiment, the processor of the electronic device may set and/or adjust a delay used for execution of processes corresponding to the broadcast, by comparing the state of the processor checked based on the operation 610 and a first preset condition associated with a broadcast. The first preset condition may include whether the temperature of the electronic device and/or the processor exceeds a preset critical temperature. The first preset condition may include whether the usage of the processor exceeds the critical usage. The first preset condition may include whether the touch input has been received. When the illustrated first preset condition is satisfied, the processor may set or increase the delay of the operation 620. As the delay increases, an interval between timings executing each of the processes corresponding to the broadcast may increase. An operation of the electronic device for setting and/or adjusting the delay based on the operation 620 will be described with reference to FIG. 7.

Referring to FIG. 6, in an operation 630, according to an embodiment, the processor of the electronic device may adjust a time resource of the processor used for execution of at least one process classified as a background process group by comparing the state of the processor checked based on the operation 610 and a second preset condition associated with a scheduling of processor. Similar to the first preset condition of the operation 620, the second preset condition may include at least one of the usage of the processor, whether the touch input has been received, and/or the temperature of the processor. Based on the second preset condition, the processor may adjust the weight that is used to determine the time resource of the processes included in the background process group. For example, the processor may change a coefficient applied to the weight of FIG. 5.

Hereinafter, an operation of the electronic device associated with to the delay set based on the operation 620 of FIG. 6 will be described with reference to FIG. 7.

FIG. 7 illustrates an exemplary operation of an electronic device transmitting information between processes. The electronic device 101 and/or the processor 110 of FIG. 1 may perform an operation of the electronic device described with reference to FIG. 7. The operation of the electronic device described with reference to FIG. 7 may be associated with the operations of FIGS. 2, 4 and/or 6.

According to an embodiment, the processor may detect a request for transmitting information from a specific process to another process. The request may be detected based on an intent object 710. The intent object 710 may include a data structure defined for transmitting information between the processes and/or requesting a task. The intent object 710 may include an action attribute requested from the process to be executed based on the intent object 710 and/or a data attribute associated with the action. For example, the intent object 710 generated for execution of a web page may include the action attribute representing that the intent object 710 was generated to request a display of the web page and an address of the web page (e.g., uniform resource location (URL) and/or uniform resource indicator (URI)). The processor may identify the processes corresponding to the intent object 710 among a plurality of processes, based on a condition (e.g., an intent filter) set by the intent object 710. According to an embodiment, the processor of the electronic device may execute the plurality of processes based on the intent object 710. For example, based on execution of the plurality of processes, the processor may broadcast information included in the intent object 710 to the plurality of processes.

According to an embodiment, the processor may perform the broadcast based on the intent object 710 by using broadcast services for each of the processes classified as a background process group and the processes classified as a root process group. Referring to FIG. 4, an exemplary state of the electronic device executing four processes (e.g., a first process 721, a second process 722, a third process 723, and a fourth process 724) based on the intent object 710 is illustrated. The electronic device that has identified the intent object 710 may sequentially execute the intent object 710 and/or four processes corresponding to the request associated with the intent object 710 based on the delay set by the operation 620 of FIG. 6. The delay may be adjusted based on at least one of a usage of the processor of the electronic device, a temperature of the electronic device, or a touch input identified by the electronic device. For example, the delay may be proportional to the usage and/or the temperature. The delay may be set by a look-up table based on the usage and/or the temperature. The delay may increase when the touch input is received.

Referring to FIG. 7, the processor may execute the first process 721 based on the intent object 710, and then execute the second process 722 based on the delay according to the state of the processor. The processor may execute the second process 722 at a timing after the delay from a timing (e.g., a timing of identifying termination response of the first process 721) of detecting the completion of the operation of the first process 721 based on the intent object 710. Based on the delay, the processor may prevent four processes associated with the intent object 710 from being executed in an overlapping manner. Based on the delay, the processor may prevent rapid increase in the usage of the processor. Based on the delay, the processor may prevent saturation of the processor. Since the saturation of the processor is prevented, the processor may respond faster to a user input such as the touch input.

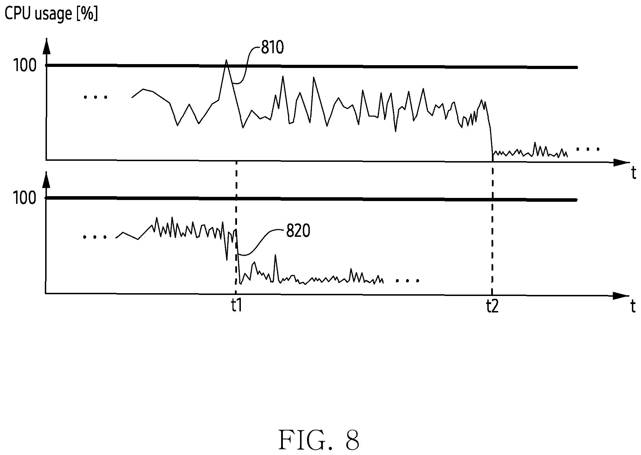

FIG. 8 is graphs illustrating a usage of a processor of an electronic device in a time domain while according to an embodiment, the electronic device is booted.

Referring to FIG. 8, graphs 810 and 820 comparing boot time of a first electronic device that calculates a resource of processes based on process groups respectively corresponding to schedule groups and a second electronic device that calculates the resource of processes based on a background process group and a root process group among the process groups are illustrated. The graph 810 represents CPU usage while the first electronic device is booted. The graph 820 represents CPU usage while the second electronic device is booted. The second electronic device may be an example of the electronic device of FIGS. 1 to 7.

Referring to FIG. 8, a timing t2 when the CPU usage of the first electronic device is decreased may be after a timing t1 when the CPU usage of the second electronic device is decreased. For example, the booting of the first electronic device may be completed later than the booting of the second electronic device. Based on the operation described with reference to FIGS. 1 to 7, the second electronic device may perform scheduling for the process with only two process groups, and may perform the operation associated with an intent object using a delay based on state of the processor. Since the second electronic device more efficiently controls CPU usage, after the first electronic device and the second electronic device are simultaneously turned on, the usage of the booting-based second electronic device may be reduced earlier than the usage of the first electronic device.

Referring to Table 2, a first case in which the time at which booting of the first electronic device is completed is repeatedly measured and a second case in which the time at which booting of the second electronic device is completed is repeatedly measured are illustrated.

**[Table 2]**

| | 1 | 2 | 3 | 4 | 5 | 6 | 7 | 8 | Average |
|---|---|---|---|---|---|---|---|---|---|
| A first case | 223 | 205 | 204 | 208 | 210 | 207 | 210 | 204 | 209 |
| A second case | 186 | 168 | 215 | 172 | 168 | 168 | 165 | 167 | 176 |

Referring to Table 2, the booting of the first electronic device may be completed after an average of 209 seconds, and the booting of the second electronic device may be completed after an average of 176 seconds. For example, based on the operations of FIGS. 1 to 7, the second electronic device may control the scheduling of the processor and/or an execution of the process based on the intent object. Based on the controlling of the scheduling and/or execution of the process, the second electronic device may reduce an interruption of execution of the process by the scheduling and may reduce the usage of the processor. Since the number and/or frequency with which execution of the process is interrupted is reduced, the second electronic device may complete or perform a specific operation (e.g., booting) faster than the first electronic device, such as graphs 810 and 820 of FIG. 8. An embodiment is not limited thereto.

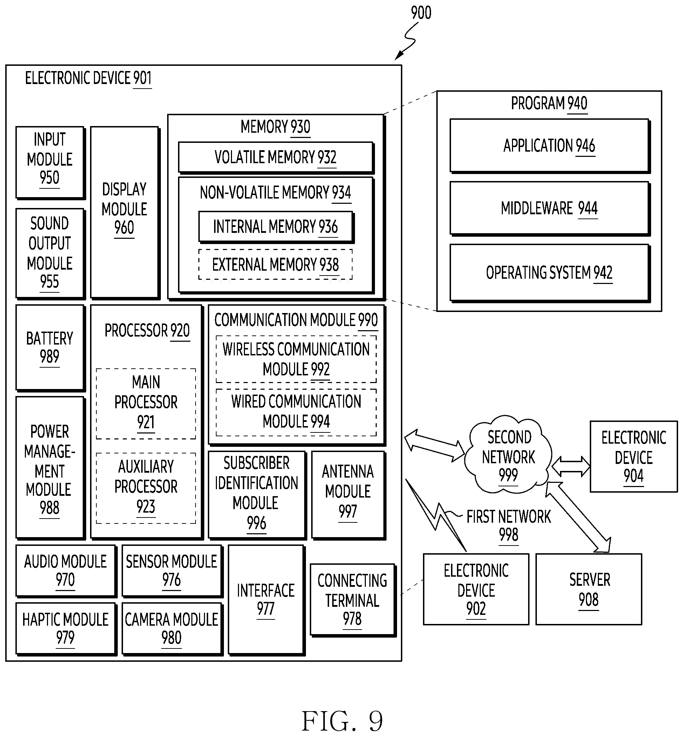

Fig. 9 is a block diagram illustrating an electronic device 901 in a network environment 900 according to various embodiments. Referring to Fig. 9, the electronic device 901 in the network environment 900 may communicate with an electronic device 902 via a first network 998 (e.g., a short-range wireless communication network), or at least one of an electronic device 904 or a server 908 via a second network 999 (e.g., a long-range wireless communication network). According to an embodiment, the electronic device 901 may communicate with the electronic device 904 via the server 908. According to an embodiment, the electronic device 901 may include a processor 920, memory 930, an input module 950, a sound output module 955, a display module 960, an audio module 970, a sensor module 976, an interface 977, a connecting terminal 978, a haptic module 979, a camera module 980, a power management module 988, a battery 989, a communication module 990, a subscriber identification module(SIM) 996, or an antenna module 997. In some embodiments, at least one of the components (e.g., the connecting terminal 978) may be omitted from the electronic device 901, or one or more other components may be added in the electronic device 901. In some embodiments, some of the components (e.g., the sensor module 976, the camera module 980, or the antenna module 997) may be implemented as a single component (e.g., the display module 960).

The processor 920 may execute, for example, software (e.g., a program 940) to control at least one other component (e.g., a hardware or software component) of the electronic device 901 coupled with the processor 920, and may perform various data processing or computation. According to one embodiment, as at least part of the data processing or computation, the processor 920 may store a command or data received from another component (e.g., the sensor module 976 or the communication module 990) in volatile memory 932, process the command or the data stored in the volatile memory 932, and store resulting data in non-volatile memory 934. According to an embodiment, the processor 920 may include a main processor 921 (e.g., a central processing unit (CPU) or an application processor (AP)), or an auxiliary processor 923 (e.g., a graphics processing unit (GPU), a neural processing unit (NPU), an image signal processor (ISP), a sensor hub processor, or a communication processor (CP)) that is operable independently from, or in conjunction with, the main processor 921. For example, when the electronic device 901 includes the main processor 921 and the auxiliary processor 923, the auxiliary processor 923 may be adapted to consume less power than the main processor 921, or to be specific to a specified function. The auxiliary processor 923 may be implemented as separate from, or as part of the main processor 921.

The auxiliary processor 923 may control at least some of functions or states related to at least one component (e.g., the display module 960, the sensor module 976, or the communication module 990) among the components of the electronic device 901, instead of the main processor 921 while the main processor 921 is in an inactive (e.g., sleep) state, or together with the main processor 921 while the main processor 921 is in an active state (e.g., executing an application). According to an embodiment, the auxiliary processor 923 (e.g., an image signal processor or a communication processor) may be implemented as part of another component (e.g., the camera module 980 or the communication module 990) functionally related to the auxiliary processor 923. According to an embodiment, the auxiliary processor 923 (e.g., the neural processing unit) may include a hardware structure specified for artificial intelligence model processing. An artificial intelligence model may be generated by machine learning. Such learning may be performed, e.g., by the electronic device 901 where the artificial intelligence is performed or via a separate server (e.g., the server 908). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 930 may store various data used by at least one component (e.g., the processor 920 or the sensor module 976) of the electronic device 901. The various data may include, for example, software (e.g., the program 940) and input data or output data for a command related thererto. The memory 930 may include the volatile memory 932 or the non-volatile memory 934.

The program 940 may be stored in the memory 930 as software, and may include, for example, an operating system (OS) 942, middleware 944, or an application 946.

The input module 950 may receive a command or data to be used by another component (e.g., the processor 920) of the electronic device 901, from the outside (e.g., a user) of the electronic device 901. The input module 950 may include, for example, a microphone, a mouse, a keyboard, a key (e.g., a button), or a digital pen (e.g., a stylus pen).

The sound output module 955 may output sound signals to the outside of the electronic device 901. The sound output module 955 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 960 may visually provide information to the outside (e.g., a user) of the electronic device 901. The display module 960 may include, for example, a display, a hologram device, or a projector and control circuitry to control a corresponding one of the display, hologram device, and projector. According to an embodiment, the display module 960 may include a touch sensor adapted to detect a touch, or a pressure sensor adapted to measure the intensity of force incurred by the touch.

The audio module 970 may convert a sound into an electrical signal and vice versa. According to an embodiment, the audio module 970 may obtain the sound via the input module 950, or output the sound via the sound output module 955 or a headphone of an external electronic device (e.g., an electronic device 902) directly (e.g., wiredly) or wirelessly coupled with the electronic device 901.

The sensor module 976 may detect an operational state (e.g., power or temperature) of the electronic device 901 or an environmental state (e.g., a state of a user) external to the electronic device 901, and then generate an electrical signal or data value corresponding to the detected state. According to an embodiment, the sensor module 976 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 977 may support one or more specified protocols to be used for the electronic device 901 to be coupled with the external electronic device (e.g., the electronic device 902) directly (e.g., wiredly) or wirelessly. According to an embodiment, the interface 977 may include, for example, a high definition multimedia interface (HDMI), a universal serial bus (USB) interface, a secure digital (SD) card interface, or an audio interface.

A connecting terminal 978 may include a connector via which the electronic device 901 may be physically connected with the external electronic device (e.g., the electronic device 902). According to an embodiment, the connecting terminal 978 may include, for example, a HDMI connector, a USB connector, a SD card connector, or an audio connector (e.g., a headphone connector).

The haptic module 979 may convert an electrical signal into a mechanical stimulus (e.g., a vibration or a movement) or electrical stimulus which may be recognized by a user via his tactile sensation or kinesthetic sensation. According to an embodiment, the haptic module 979 may include, for example, a motor, a piezoelectric element, or an electric stimulator.

The camera module 980 may capture a still image or moving images. According to an embodiment, the camera module 980 may include one or more lenses, image sensors, image signal processors, or flashes.

The power management module 988 may manage power supplied to the electronic device 901. According to one embodiment, the power management module 988 may be implemented as at least part of, for example, a power management integrated circuit (PMIC).

The battery 989 may supply power to at least one component of the electronic device 901. According to an embodiment, the battery 989 may include, for example, a primary cell which is not rechargeable, a secondary cell which is rechargeable, or a fuel cell.

The communication module 990 may support establishing a direct (e.g., wired) communication channel or a wireless communication channel between the electronic device 901 and the external electronic device (e.g., the electronic device 902, the electronic device 904, or the server 908) and performing communication via the established communication channel. The communication module 990 may include one or more communication processors that are operable independently from the processor 920 (e.g., the application processor (AP)) and supports a direct (e.g., wired) communication or a wireless communication. According to an embodiment, the communication module 990 may include a wireless communication module 992 (e.g., a cellular communication module, a short-range wireless communication module, or a global navigation satellite system (GNSS) communication module) or a wired communication module 994 (e.g., a local area network (LAN) communication module or a power line communication (PLC) module). A corresponding one of these communication modules may communicate with the external electronic device via the first network 998 (e.g., a short-range communication network, such as Bluetooth^{™}, wireless-fidelity (Wi-Fi) direct, or infrared data association (IrDA)) or the second network 999 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 992 may identify and authenticate the electronic device 901 in a communication network, such as the first network 998 or the second network 999, using subscriber information (e.g., international mobile subscriber identity (IMSI)) stored in the subscriber identification module 996.

The wireless communication module 992 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 992 may support a high-frequency band (e.g., the mmWave band) to achieve, e.g., a high data transmission rate. The wireless communication module 992 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 992 may support various requirements specified in the electronic device 901, an external electronic device (e.g., the electronic device 904), or a network system (e.g., the second network 999). According to an embodiment, the wireless communication module 992 may support a peak data rate (e.g., 20Gbps or more) for implementing eMBB, loss coverage (e.g., 964dB or less) for implementing mMTC, or U-plane latency (e.g., 0.5ms or less for each of downlink (DL) and uplink (UL), or a round trip of 9ms or less) for implementing URLLC.

The antenna module 997 may transmit or receive a signal or power to or from the outside (e.g., the external electronic device) of the electronic device 901. According to an embodiment, the antenna module 997 may include an antenna including a radiating element composed of a conductive material or a conductive pattern formed in or on a substrate (e.g., a printed circuit board (PCB)). According to an embodiment, the antenna module 997 may include a plurality of antennas (e.g., array antennas). In such a case, at least one antenna appropriate for a communication scheme used in the communication network, such as the first network 998 or the second network 999, may be selected, for example, by the communication module 990 (e.g., the wireless communication module 992) from the plurality of antennas. The signal or the power may then be transmitted or received between the communication module 990 and the external electronic device via the selected at least one antenna. According to an embodiment, another component (e.g., a radio frequency integrated circuit (RFIC)) other than the radiating element may be additionally formed as part of the antenna module 997.

According to various embodiments, the antenna module 997 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 901 and the external electronic device 904 via the server 908 coupled with the second network 999. Each of the electronic devices 902 or 904 may be a device of a same type as, or a different type, from the electronic device 901. According to an embodiment, all or some of operations to be executed at the electronic device 901 may be executed at one or more of the external electronic devices 902, 904, or 908. For example, if the electronic device 901 should perform a function or a service automatically, or in response to a request from a user or another device, the electronic device 901, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 901. The electronic device 901 may provide the outcome, with or without further processing of the outcome, as at least part of a reply to the request. To that end, a cloud computing, distributed computing, mobile edge computing (MEC), or client-server computing technology may be used, for example. The electronic device 901 may provide ultra low-latency services using, e.g., distributed computing or mobile edge computing. In another embodiment, the external electronic device 904 may include an internet-of-things (IoT) device. The server 908 may be an intelligent server using machine learning and/or a neural network. According to an embodiment, the external electronic device 904 or the server 908 may be included in the second network 999. The electronic device 901 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 940) including one or more instructions that are stored in a storage medium (e.g., internal memory 936 or external memory 938) that is readable by a machine (e.g., the electronic device 901). For example, a processor (e.g., the processor 920) of the machine (e.g., the electronic device 901) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added. The electronic device 901 and/or the electronic device 902 of FIG. 9 may be an example of the electronic device 101 of FIG. 1.

In an embodiment, a method of improving response speed for a processor may be required. In an embodiment, the method of efficiently performing scheduling for a plurality of processes may be required. In an embodiment, the method of preventing a rapid increase in a load of the processor may be required. In an embodiment, the method of increasing response speed of the electronic device to a user input, such as a touch input, may be required. As described above, according to an embodiment, an electronic device (e.g., an electronic device 101 in FIG. 1 and/or electronic devices 901 and 902 in FIG. 9) may include memory (e.g., memory 120 in FIG. 1) for storing instructions and the processor (e.g., the processor 110 in FIG. 1) for executing the instructions. The processor may be configured to determine, while executing the instructions based on a plurality of processes, schedule groups respectively corresponding to the plurality of processes based on states of the plurality of processes. The processor may be configured to adjust, in response to switching the at least one process from a first schedule group (e.g., a background schedule group 324 in FIG. 3) for execution in background to other schedule groups or switching from the other schedule groups to the first schedule group based on the determination of the schedule groups, a length of a time section used for execution of the at least one process. The processor may be configured to execute the at least one process in the time section having the adjusted length. According to an embodiment, the processor of the electronic device may have an improved response speed by efficiently performing scheduling for the plurality of processes. According to an embodiment, the electronic device may perform scheduling for the plurality of processes to prevent a rapid increase in the load of the processor. According to an embodiment, the electronic device may process the user input such as the touch input based on an increased response speed.

For example, the processor may be configured to classify the at least one process switched to the first schedule group from the other schedule groups as a first process group corresponding to profile information for executing in background.

For example, the processor may be configured to classify the at least one process switched to the other schedule groups from the first schedule group as a root process group.

For example, the processor may be configured to determine lengths of time sections used for executing each of the plurality of processes based on weights assigned to each of the plurality of processes. The weights assigned to each of the plurality of processes may be selected among a first weight associated with the first process group corresponding to the first schedule group for executing in the background and a second weight associated with a second process group different from the first process group.

For example, the processor may be configured to adjust the first weight based on at least one of a usage of the processor of, a temperature identified by a temperature sensor of the electronic device, or the touch input identified based on a touch sensor of the electronic device.

For example, the processor may be configured to, based on requests for transmitting information between the plurality of processes, sequentially execute processes respectively corresponding to the requests based on a preset delay.

For example, the processor may be configured to adjust the preset delay based on at least one of the usage of the processor, the temperature identified by the temperature sensor of the electronic device, or the touch event identified based on the touch sensor of the electronic device.

For example, the processor may be configured to detect the requests based on an intent object.

For example, the processor may be configured to classify the plurality of processes as any one of the first process group for executing in background and the second process group different from the first process group, based on schedule groups respectively corresponding to the plurality of processes.

As described above, the method of the electronic device, according to an embodiment, may include determining, while executing the instructions based on the plurality of processes, schedule groups respectively corresponding to the plurality of processes based on states of the plurality of processes. The method may include adjusting, in response to switching the at least one process from the first schedule group for execution in background to other schedule groups or switching from the other schedule groups to the first schedule group based on the determination of the schedule groups, the length of the time section used for execution of the at least one process. The method may include executing the at least one process in the time section having the adjusted length.

For example, the method may include classifying the at least one process switched to the first schedule group from the other schedule groups as the first process group corresponding to profile information for executing in background.

For example, the method may include classifying the at least one process switched to the other schedule groups from the first schedule group as the root process group.

For example, the adjusting may include determining lengths of time sections used for executing each of the plurality of processes based on weights assigned to each of the plurality of processes.

For example, the weights assigned to each of the plurality of processes may be selected among the first weight associated with the first process group corresponding to the first schedule group for executing in the background and the second weight associated with the second process group different from the first process group.

For example, the adjusting may include adjusting the first weight based on at least one of the usage of the processor of the electronic device, the temperature identified by the temperature sensor of the electronic device, or the touch input identified based on the touch sensor of the electronic device.

For example, the method may include, based on requests for transmitting information between the plurality of processes, sequentially executing processes respectively corresponding to the requests based on the preset delay.

For example, sequentially executing processes respectively corresponding to the requests may include adjusting the preset delay based on at least one of the usage of the processor of the electronic device, the temperature identified by the temperature sensor of the electronic device, or the touch event identified based on the touch sensor of the electronic device.

For example, the method may include detecting the requests based on the intent object.

For example, the method may include classifying the plurality of processes as any one of the first process group for executing in background and the second process group different from the first process group, based on schedule groups respectively corresponding to the plurality of processes.

As described above, according to an embodiment, a non-transitory computer-readable storage medium may include instructions. When executed by the processor of the electronic device, the instructions, based on state of the plurality of processes, may cause the processor to determine the schedule group respectively corresponding to the plurality of processes. The instructions, when executed by the processor, may cause the processor to adjust, in response to detecting at least one process switched the at least one process from the first schedule group for execution in background to other schedule groups or switched from the other schedule groups to the first schedule group, based on the determination, the length of the time section used for execution of the at least one process. The instructions, when executed by the processor, may cause the processor to execute the at least one process in the time section having the adjusted length.

For example, the instructions, when executed by the processor, may cause the processor to classify the at least one process switched to the first schedule group from the other schedule groups as the first process group corresponding to profile information for executing in background.

For example, the instructions, when executed by the processor, may cause the processor to classify the at least one process switched to the other schedule groups from the first schedule group as the root process group.

For example, the instructions, when executed by the processor, may cause the processor to determine lengths of time sections used for executing each of the plurality of processes based on weights assigned to each of the plurality of processes. The weights assigned to each of the plurality of processes may be selected among the first weight associated with the first process group corresponding to the first schedule group for executing in the background and the second weight associated with the second process group different from the first process group.

For example, the instructions, when executed by the processor, may cause the processor to adjust the first weight based on at least one of the usage of the processor, the temperature identified by the temperature sensor of the electronic device, or the touch input identified based on the touch sensor of the electronic device.

For example, the instructions, when executed by the processor, may cause the processor to, based on requests for transmitting information between the plurality of processes, sequentially execute processes respectively corresponding to the requests based on the preset delay.

For example, the instructions, when executed by the processor, may cause the processor to adjust the preset delay based on at least one of the usage of the processor, the temperature identified by the temperature sensor of the electronic device, or the touch event identified based on the touch sensor of the electronic device.

For example, the instructions, when executed by the processor, may cause the processor to detect the requests based on the intent object.

For example, the instructions, when executed by the processor, may cause the processor to classify the plurality of processes as any one of the first process group for executing in background and the second process group different from the first process group, based on schedule groups respectively corresponding to the plurality of processes.

In a first example, an electronic device may comprise memory storing instructions, comprising one or more storage mediums; and at least one processor comprising processing circuitry. The instructions, when executed by an electronic device, may cause the electronic device to determine, for each of a plurality of processes while executing the instructions, a corresponding schedule group among a plurality of predetermined schedule groups based on a state of the process. The instructions, when executed by an electronic device, may cause the electronic device to redetermine, in response to switching at least one process of the plurality of processes from a first process group to a second process group or switching the at least one process from the second process group to the first process group, a length of a time section used for execution of the at least one process. The instructions, when executed by an electronic device, may cause the electronic device to execute the at least one process in the time section having the redetermined length. The first process group may comprise a schedule group corresponding to processes for background execution. The second process group may comprise all of the other schedule groups except for the schedule group corresponding to the processes for background execution.

In a second example, the instructions, when executed by an electronic device, may cause the electronic device to determine, based on weights respectively assigned to the plurality of processes, lengths of time sections used to execute each of the plurality of processes. The lengths of time sections used to execute processes in the first process group may be determined based on a first weight corresponding to the first process group. The lengths of time sections used to execute processes in the second process group may be determined based on a second weight corresponding to the second process group.

In a third example, the instructions of the second example, when executed by an electronic device, may cause the electronic device to adjust the first weight based on at least one of a usage of the processor, a temperature identified by a temperature sensor of the electronic device, or a touch input identified via a touch sensor of the electronic device.

In a fourth example, the first weight of the second or third example, may be divided among each process in the first process group; and each process in the second process group may be assigned the second weight.

In a fifth example, the processor of any of the first to fourth examples may be configured to schedule the at least one process based on first profile information corresponding to the first process group in the case that the at least one process is switched to the first process group. The instructions, when executed by an electronic device, may cause the electronic device to schedule the at least one process based on second profile information corresponding to the second process group in the case that the at least one process is switched to the second process group.

In a sixth example, the first profile information and second profile information of the fifth example may include at least one of: memory bandwidth limit; time resource share of the processor; cache memory size limit; and network resource limit.

In a seventh example, the instructions of any of the first to sixth examples, when executed by an electronic device, may cause the electronic device to sequentially execute, based on requests for transmitting information between the plurality of processes, processes respectively corresponding to the requests based on a preset delay.

In an eighth example, the instructions of the seventh example , when executed by an electronic device, may cause the electronic device to adjust the preset delay based on at least one of a usage of the processor, a temperature identified by a temperature sensor of the electronic device, or a touch event identified via a touch sensor of the electronic device.

In a ninth example, the instructions of any of the seventh or eighth examples, when executed by an electronic device, may cause the electronic device to detect the requests based on an intent object.

In a tenth example, the instructions of any one of the first to ninth examples, when executed by an electronic device, may cause the electronic device to execute, in the case that the at least one process is switched from a schedule group in the second process group to another schedule group in the second process group, the at least one process without redetermining a length of a time section used for execution of the at least one process.

In an eleventh example, a method of an electronic device may be provided. The method may comprise determining, for each of a plurality of processes to be executed in the electronic device, a corresponding schedule group among a plurality of predetermined schedule groups based on a state of the process. The method may comprise redetermining, in response to switching at least one process of the plurality of processes from a first process group to a second process group or switching the at least one process from the second process group to the first process group, a length of a time section used for execution of the at least one process. The method may comprise executing the at least one process in the time section having the redetermined length. The first process group may comprise a schedule group corresponding to processes for background execution. The second process group may comprise all of the other schedule groups except for the schedule group corresponding to the processes for background execution.

In a twelfth example, the method of the eleventh example, wherein redetermining a length of a time section may comprise determining, based on weights respectively assigned to the plurality of processes, lengths of time sections used to execute each of the plurality of processes. The lengths of time sections used to execute processes in the first process group may be determined based on a first weight corresponding to the first process group. The lengths of time sections used to execute processes in the second process group may be determined based on a second weight corresponding to the second process group.

In a thirteenth example, the method of the twelfth example, wherein redetermining a length of a time section may comprise adjusting the first weight based on at least one of a usage of the processor of the electronic device, a temperature identified by a temperature sensor of the electronic device, or a touch input identified via a touch sensor of the electronic device.

In a fourteenth example, the first weight of the twelfth or thirteenth example may be divided among each process in the first process group. Each process in the second process group may be assigned the second weight.

In a fifteenth example, the method of any of the eleventh to fourteenth examples may comprise scheduling the at least one process based on first profile information corresponding to the first process group in the case that the at least one process is switched to the first process group. The method may comprise scheduling the at least one process based on second profile information corresponding to the second process group in the case that the at least one process is switched to the second process group.

In a sixteenth example, the first profile information and second profile information of the fifteenth example may include at least one of: memory bandwidth limit; time resource share of the processor of the electronic device; cache memory size limit; and network resource limit.

In a seventeenth example, the method of any of the eleventh to sixteenth examples may comprise sequentially executing, based on requests for transmitting information between the plurality of processes, processes respectively corresponding to the requests based on a preset delay.

In an eighteenth example, the method of the seventeenth example may comprise adjusting the preset delay based on at least one of a usage of the processor of the electronic device, a temperature identified by a temperature sensor of the electronic device, or a touch event identified via a touch sensor of the electronic device.

In a nineteenth example, the method of the seventeenth or eighteenth examples may comprise detecting the requests based on an intent object.

In a twentieth example, the method of any one of the eleventh to nineteenth examples may comprise executing, in the case that the at least one process is switched from a schedule group in the second process group to another schedule group in the second process group, the at least one process without redetermining a length of a time section used for execution of the at least one process.

In a twenty-first example, a non-transitory computer-readable storage medium including instructions may be provided. The instructions may, when executed by a processor of an electronic device, cause the electronic device to perform the method of any one of the eleventh to twentieth examples.

In an embodiment, a non-transitory computer readable storage medium storing instructions may be provided. The instructions, when executed by an electronic device, may cause the electronic device to determine, for each of a plurality of processes while executing the instructions, a corresponding schedule group among a plurality of predetermined schedule groups based on a state of the process. The instructions, when executed by an electronic device, may cause the electronic device to redetermine, in response to switching at least one process of the plurality of processes from a first process group to a second process group or switching the at least one process from the second process group to the first process group, a length of a time section used for execution of the at least one process. The instructions, when executed by an electronic device, may cause the electronic device to execute the at least one process in the time section having the redetermined length. The first process group may comprise a schedule group corresponding to processes for background execution. The second process group may comprise all of the other schedule groups except for the schedule group corresponding to the processes for background execution.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include may be those configured to store program instructions, including a magnetic medium such as a hard disk, floppy disk, and magnetic tape, optical recording medium such as a CD-ROM and DVD, magneto-optical medium, such as a floptical disk, and ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. An electronic device (101; 901, 902), comprising:
memory (120) storing instructions, comprising one or more storage mediums; and
at least one processor (110) comprising processing circuitry,
wherein the instructions, when executed by the at least one processor individually or collectively, cause the electronic device to:
determine, for each of a plurality of processes while executing the instructions, a corresponding schedule group among a plurality of predetermined schedule groups based on a state of the process;
in response to switching at least one process of the plurality of processes from a first process group to a second process group or switching the at least one process from the second process group to the first process group, redetermine a length of a time section used for execution of the at least one process; and
execute the at least one process in the time section having the redetermined length;
wherein the first process group comprises a schedule group corresponding to processes for background execution, and
wherein the second process group comprises all of the other schedule groups except for the schedule group corresponding to the processes for background execution.

2. The electronic device of claim 1, wherein the instructions, when executed by the at least one processor individually or collectively, cause the electronic device to:
determine, based on weights respectively assigned to the plurality of processes, lengths of time sections used to execute each of the plurality of processes; wherein the lengths of time sections used to execute processes in the first process group are determined based on a first weight corresponding to the first process group; and
wherein the lengths of time sections used to execute processes in the second process group are determined based on a second weight corresponding to the second process group .

3. The electronic device of claim 2, wherein the instructions, when executed by the at least one processor individually or collectively, cause the electronic device to:
adjust the first weight based on at least one of a usage of the processor, a temperature identified by a temperature sensor of the electronic device, or a touch input identified via a touch sensor of the electronic device.

4. The electronic device of claim 2 or 3, wherein the first weight is divided among each process in the first process group; and
wherein each process in the second process group is assigned the second weight.

5. The electronic device of any of claims 1 to 4 , wherein the instructions, when executed by the at least one processor individually or collectively, cause the electronic device to:
schedule the at least one process based on first profile information corresponding to the first process group in the case that the at least one process is switched to the first process group; and
schedule the at least one process based on second profile information corresponding to the second process group in the case that the at least one process is switched to the second process group.

6. The electronic device of claim 5, wherein the first profile information and second profile information include at least one of:
memory bandwidth limit;
time resource share of the processor;
cache memory size limit; and
network resource limit.

7. The electronic device of any of claims 1 to 6, wherein the instructions, when executed by the at least one processor individually or collectively, cause the electronic device to:
based on requests for transmitting information between the plurality of processes, sequentially execute processes respectively corresponding to the requests based on a preset delay.

8. The electronic device of claim 7, wherein the instructions, when executed by the at least one processor individually or collectively, cause the electronic device to:
adjust the preset delay based on at least one of a usage of the processor, a temperature identified by a temperature sensor of the electronic device, or a touch event identified via a touch sensor of the electronic device.

9. The electronic device of claim 7 or claim 8, wherein the instructions, when executed by the at least one processor individually or collectively, cause the electronic device to:
detect the requests based on an intent object.

10. The electronic device of any one of claims 1 to 9, wherein the instructions, when executed by the at least one processor individually or collectively, cause the electronic device to:
execute, in the case that the at least one process is switched from a schedule group in the second process group to another schedule group in the second process group, the at least one process without redetermining a length of a time section used for execution of the at least one process.

11. A method of an electronic device, the method comprising:
determining, for each of a plurality of processes to be executed in the electronic device, a corresponding schedule group among a plurality of predetermined schedule groups based on a state of the process;
in response to switching at least one process of the plurality of processes from a first process group to a second process group or switching the at least one process from the second process group to the first process group, redetermining a length of a time section used for execution of the at least one process; and
executing the at least one process in the time section having the redetermined length;
wherein the first process group comprises a schedule group corresponding to processes for background execution, and
wherein the second process group comprises all of the other schedule groups except for the schedule group corresponding to the processes for background execution.

12. The method of claim 11, wherein redetermining a length of a time section comprises:
determining, based on weights assigned to each of the plurality of processes, lengths of time sections used for executing each of the plurality of processes;
wherein the lengths of time sections used to execute processes in the first process group are determined based on a first weight corresponding to the first process group; and
wherein the lengths of time sections used to execute processes in the second process group are determined based on a second weight corresponding to the second process group.

13. The method of claim 12, wherein redetermining a length of a time section comprises:
adjusting the first weight based on at least one of a usage of the processor of the electronic device, a temperature identified by a temperature sensor of the electronic device, or a touch input identified via a touch sensor of the electronic device.

14. The method of any of claims 11 to 13, further comprising:
based on requests for transmitting information between the plurality of processes, sequentially executing processes respectively corresponding to the requests based on a preset delay;
wherein the preset delay is adjusted based on at least one of a usage of the processor, a temperature identified by a temperature sensor of the electronic device, or a touch event identified via a touch sensor of the electronic device; and
wherein the requests are detected based on an intent object.

15. A non-transitory computer readable storage medium storing instructions, wherein the instructions, when executed by an electronic device, cause the electronic device to:
determine, for each of a plurality of processes while executing the instructions, a corresponding schedule group among a plurality of predetermined schedule groups based on a state of the process;
in response to switching at least one process of the plurality of processes from a first process group to a second process group or switching the at least one process from the second process group to the first process group, redetermine a length of a time section used for execution of the at least one process; and
execute the at least one process in the time section having the redetermined length;
wherein the first process group comprises a schedule group corresponding to processes for background execution, and
wherein the second process group comprises all of the other schedule groups except for the schedule group corresponding to the processes for background execution.
